# EUROPÄISCHE PATENTSCHRIFT

(11) **EP 4 145 007 B1**
(45) Veröffentlichungstag und Bekanntmachung des Hinweises auf die Patenterteilung: **13.11.2024**
(21) Anmeldenummer: 22193207.2
(22) Anmeldetag: 31.08.2022
(51) Int. Cl.: F16C 11/08, F16C 11/06, B62D 1/00, B60G 7/02

(54) **ELASTISCHES GELENK FÜR EINEN FAHRZEUG-LENKERARM**
ELASTIC JOINT FOR A VEHICLE STEERING ARM
ARTICULATION ÉLASTIQUE POUR UN BRAS DIRECTEUR DE VÉHICULE

(30) Priorität: 03.09.2021 DE 102021122875
(43) Veröffentlichungstag der Anmeldung: 08.03.2023
(73) Patentinhaber: BHC GUMMI-METALL GMBH, 53340 Meckenheim (DE)
(72) Erfinder: Krause, Wolfram, 53913 Swisttal - Morenhoven (DE); Nedjmi, Mustafa, 53179 Bonn (DE)
(74) Vertreter: Janke Scholl Patentanwälte PartG mbB

(56) Entgegenhaltungen:
- DE-A1- 102004 045 064
- DE-A1- 102014 112 181
- DE-A1- 102014 223 534
- US-A1- 2013 047 761

## Beschreibung

Die vorliegende Erfindung betrifft ein elastisches Gelenk für einen Fahrzeug-Lenkerarm, mit einem auf einer Längsachse sich erstreckenden Zentralelement aus zwei Befestigungszapfen und einem zwischen diesen angeordneten Gelenkkern, wobei der Gelenkkern ballig geformt ist aus in Bezug auf die Längsachse ausschließlich runden Querschnitten, deren Größe zu den Befestigungszapfen hin jeweils abnimmt, und einem den Gelenkkern vollumfänglich umschließenden Gelenkkörper, der sich aus mindestens zwei Teilschalen zusammensetzt, die sich jeweils nur über einen Teilumfang des Gelenkkerns erstrecken und jeweils aus einer starren Außenschale, die auf zumindest einem Teil ihrer Länge eine teilzylindrische Außenfläche aufweist, und einer verformbaren Innenschale bestehen.

Ein elastisches Gelenk der eingangs genannten Art ist aus dem Dokument EP 2 259 935 B1 bekannt. Das aus dem Dokument EP 2 259 935 B1 bekannte Gelenk hat den Nachteil, dass dieses im fertig montierten Zustand und unter den auftretenden Betriebslasten eine hohe Querdehnung bzw. Spannung erfährt.

Ein aus der DE 10 2014 223 534 A1 bekanntes elastisches Gelenk für ein Fahrzeug verwendet ein axial sich erstreckendes Zentralelement aus zwei Befestigungszapfen und dazwischen einem Gelenkkern, der überwiegend ballig geformt ist mit zusätzlichen, axial verlaufenden Stegen, um so Drehmomente abzufangen und ein Durchrutschen in Umfangsrichtung zu verhindern. Zwei Elastomerkörper umschließen den Gelenkkern und sind ihrerseits in einer gemeinsamen Außenhülse abgestützt. Die Elastomerkörper sind als Halbschalen gestaltet, welche bei der Lagermontage so in Axialrichtung auf den Gelenkkern und dessen Stege aufgeschoben werden, dass sich im Betrieb ein vollflächiger Kontakt zwischen den Elastomerkörpern und dem Gelenkkern einstellt.

Der Erfindung liegt die technische Problemstellung zugrunde, ein verbessertes elastisches Gelenk für einen Fahrzeug-Lenkerarm anzugeben, das im fertig montierten Zustand und unter den auftretenden Betriebslasten insbesondere eine verringerte Querdehnung bzw. Spannung erfährt.

Diese technische Problemstellung wird durch ein elastisches Gelenk mit den Merkmalen des Anspruchs 1 gelöst. Weitere Ausgestaltungen der Erfindung ergeben sich aus den abhängigen Ansprüchen und aus der nachstehenden Beschreibung.

Gemäß einem ersten Aspekt betrifft die Erfindung ein elastisches Gelenk für einen Fahrzeug-Lenkerarm, mit einem auf einer Längsachse sich erstreckenden Zentralelement aus zwei Befestigungszapfen und einem zwischen diesen angeordneten Gelenkkern, wobei der Gelenkkern ballig geformt ist aus in Bezug auf die Längsachse ausschließlich runden Querschnitten, deren Größe zu den Befestigungszapfen hin jeweils abnimmt, einem den Gelenkkern vollumfänglich umschließenden Gelenkkörper, der sich aus mindestens zwei Teilschalen zusammensetzt, die sich jeweils nur über einen Teilumfang des Gelenkkerns erstrecken und jeweils aus einer starren Außenschale, die auf zumindest einem Teil ihrer Länge eine teilzylindrische Außenfläche aufweist, und einer verformbaren Innenschale bestehen. Das elastische Gelenk zeichnet sich dadurch aus, dass die Innenschale ausschließlich aus einem Elastomer besteht, dass das Elastomer außen mit der jeweiligen Außenschale fest verbunden und innen unmittelbar gegen den Gelenkkern abgestützt ist, und dass in Richtung der Längsachse erste Bereiche, in denen sich das Elastomer unmittelbar gegen den Gelenkkern abstützt, durch einen zweiten Bereich ohne einen Kontakt zwischen Elastomer und Gelenkkern voneinander getrennt sind.

Dadurch, dass der zweite Bereich zwischen den ersten Bereichen angeordnet ist und keinen Kontakt zu dem Gelenkkern hat, wird die im fertig montierten Zustand und unter den auftretenden Betriebslasten vorliegende Querdehnung bzw. Spannung reduziert, da sich das Elastomer der ersten Bereiche in Richtung des einen Hohlraum bildenden zweiten Bereichs ausdehnen bzw. verformen kann.

Die zwei Befestigungszapfen des Zentralelements können z. B. an einem Bolzen gebildet sein bzw. Teil eines Bolzens sein, der den Gelenkkern durchdringt. Ein erster Endabschnitt des Bolzens kann einen ersten der zwei Befestigungszapfen bilden und ein zweiter Endabschnitt des Bolzens kann einen zweiten der zwei Befestigungszapfen bilden. Der Bolzen kann einen metallischen Werkstoff aufweisen oder aus einem metallischen Werkstoff bestehen. Ein zwischen den Befestigungszapfen angeordneter Mittelteil des Bolzens ist vollständig von dem Gelenkkern umschlossen.

Wenn vorliegend davon gesprochen wird, dass die Innenschale ausschließlich aus einem Elastomer besteht, so bedeutet dies insbesondere, dass die Innenschale keine metallische Armierung und keinen metallischen Kern oder dergleichen aufweist, der von dem Elastomer teilweise oder vollständig umschlossen wäre.

Jeder Befestigungszapfen weist vorzugsweise eine im Wesentlichen kreiszylindrische Durchgangsöffnung als Befestigungshilfe auf.

Das elastische Gelenk kann insbesondere spiegelsymmetrisch zu einer die Längsachse aufweisenden Ebene und zu einer weiteren Ebene, die senkrecht zur Längsachse orientiert ist, ausgestaltet sein.

Die Außenschale weist auf zumindest einem Teil ihrer Länge eine teilzylindrische Außenfläche oder mehr als eine teilzylindrische Außenfläche auf. Es kann vorgesehen sein, dass diese mindestens eine teilzylindrische Außenfläche ausgebildet ist, unter Bildung eines Presssitzes in eine umgebende, ebenfalls zylindrische Aufnahmeöffnung eingepresst zu werden. Im Fall mehrerer teilzylindrischer Außenflächen ergänzen sich diese im eingepressten Zustand zu einer im Wesentlichen zylindrischen Außenfläche. So kann eine gegenüber Kippkräften stabile, einfache und kostengünstige Montage erreicht werden.

Der zweite Bereich kann durch eine in Umfangsrichtung um den Gelenkkern führende Nut in dem Elastomer gebildet sein, und kann insbesondere in das Elastomer eingeformt sein.

Die Nuten in den Teilschalen können sich zu einer in Umfangsrichtung vollumfänglichen Nut ergänzen, die daher einen ringförmigen Hohlraum bildet. Auf diese Weise kann eine in axialer und radialer Richtung betrachtet gleichförmige Elastizität des Gelenks erreicht werden

Die Nut kann von U-förmigem Nutquerschnitt mit gerundetem Nutgrund sein. Durch die Rundung können Spannungsspitzen im Nutgrund reduziert werden.

Der Nutquerschnitt der Nut kann gemäß alternativer Ausgestaltungen trapezförmig oder V-förmig sein.

Die Anzahl der ersten Bereiche kann um den Zähler 1 größer als die Anzahl der zweiten Bereiche sein. Insbesondere kann ein zahnförmiges Profil an dem Elastomer gebildet sein, das in axialer Richtung aneinander angrenzende Berge und Täler bzw. Zähne und Zahnlücken aufweist, ähnlich einem Zahnriemen, einem Zahnrad oder dergleichen.

Es kann vorgesehen sein, dass die Anzahl der ersten Bereiche mindestens drei und die Anzahl der zweiten Bereiche mindestens zwei beträgt. Es kann insbesondere vorgesehen sein, dass die Anzahl der ersten Bereiche vier und die Anzahl der zweiten Bereiche drei beträgt.

Je nach geforderter Steifigkeit können die Dimensionen, d.h. die axiale Breite und radiale Höhe, die Anzahl und die Form der ersten und zweiten Bereiche angepasst werden.

Das Elastomer kann in einem nahe der Längsmitte des Gelenkkerns gelegenen ersten Bereich von größerer radialer Dicke sein als in ersten Bereichen, die näher zu den Befestigungszapfen hin angeordnet sind. Das Elastomer kann insbesondere endseitig verjüngt ausgestaltet sein.

Die Außenschalen können jeweils Halbschalen aus kaltverformtem Stahlblech sein. So können die Außenschalen einfach und kostengünstig hergestellt werden.

Das Elastomer der Innenschalen kann durch Anvulkanisieren mit den Innenseiten der Außenschalen verbunden sein, wobei insbesondere Haftvermittler eingesetzt werden können.

Die Außenschalen können verjüngte Bereiche aufweisen, in denen insbesondere die Innendurchmesser der jeweiligen Außenschale reduziert sind. Die Außenschalen können insbesondere konisch verjüngte Bereiche aufweisen, wobei die verjüngten Bereiche der Außenschalen Endabschnitte der Innenschalen zumindest abschnittsweise axial einfassen. Auf diese Weise kann im fertig montierten Zustand durch die Form der Außenschalen eine axiale Vorspannung erreicht werden, und zwar auch ohne zusätzliche Bauteile wie Stützringe oder dergleichen.

Nachstehend wird die Erfindung anhand einer Ausführungsbeispiele darstellenden Zeichnung näher beschrieben. Es zeigen jeweils schematisch:
- Fig. 1: ein erfindungsgemäßes elastisches Gelenk für einen Fahrzeug-Lenkerarm in einer perspektivischen Ansicht und vor der abschließenden Montage;
- Fig. 2: das Gelenk aus Fig. 1 mit angepressten Teilschalen nach abgeschlossener Montage;
- Fig. 3: das elastische Gelenk aus Fig. 1 im fertig montierten Zustand innerhalb einer umgebenden Aufnahmeöffnung.

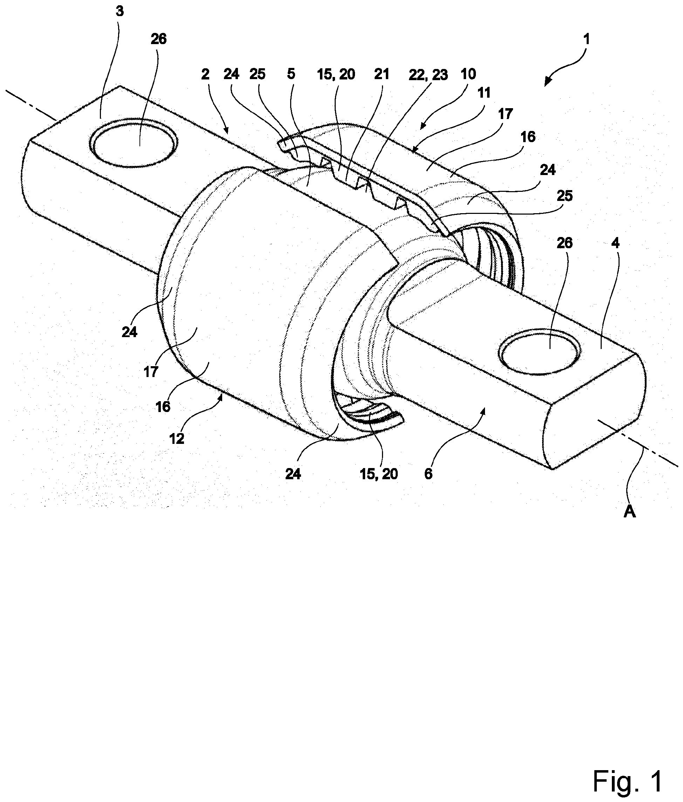

Fig. 1 zeigt ein elastisches Gelenk 1 für einen Fahrzeug-Lenkerarm mit einem auf einer Längsachse A, die sich quer zu dem Fahrzeug-Lenkerarm erstreckt, sich erstreckenden Zentralelement 2. Das Zentralelement 2 setzt sich zusammen aus zwei Befestigungszapfen 3, 4 und einem zwischen diesen angeordneten Gelenkkern 5. Der Gelenkkern 5 ist ballig geformt aus in Bezug auf die Längsachse A ausschließlich runden Querschnitten, deren Größe zu den Befestigungszapfen 3, 4 hin jeweils abnimmt.

Die Befestigungsabschnitte 3, 4 sind Endabschnitte 3, 4 eines Bolzens 6, der den Gelenkkern 5 auf dessen Längsachse A durchdringt bzw. der in seinem zwischen den Bolzen 6 angeordneten Mittelabschnitt von dem Gelenkkern 5 umfangsseitig eingefasst ist.

Das elastisches Gelenk 1 hat einen den Gelenkkern 5 vollumfänglich umschließenden Gelenkkörper 10, der sich beim Ausführungsbeispiel aus zwei gleich großen Teilschalen 11, 12 zusammensetzt. In einer alternativen Ausführung kann sich der Gelenkkörper 10 aus insgesamt drei gleich großen Teilschalen zusammensetzen. Die Teilschalen 11, 12 erstrecken sich jeweils in gleichen Teilen über einen Teilumfang des Gelenkkerns 5.

Die Teilschalen 11, 12 bestehen jeweils aus einer starren Außenschale 16, die auf zumindest einem Teil ihrer Länge eine zylindrisch gestaltete Außenfläche 17 aufweist, und aus einer aus einem verformbaren Material bestehenden Innenschale 15. Die Teilschalen 11, 12 sind beim Ausführungsbeispiel Halbschalen.

Die jeweilige Innenschale 15 besteht ausschließlich aus einem Elastomer 20. Das Elastomer 20 weist keinen metallischen Kern oder ähnliche Verstärkungselemente auf.

Außen ist das Elastomer 20 mit der Innenseite der jeweiligen Außenschale 16 fest verbunden. Innen ist das Elastomer 20 unmittelbar, also ohne irgendwelche Zwischenlagen gegen den Gelenkkern 5 abgestützt.

Das Elastomer 20 hat in Richtung der Längsachse A sich erstreckende erste Bereiche 21, in denen sich das Elastomer 20 gegen den Gelenkkern 5 abstützt. Diese ersten Bereiche 21 sind durch zweite Bereiche 22 voneinander getrennt, wobei die zweiten Bereiche 22 ohne einen Kontakt zwischen Elastomer 20 und Gelenkkern 5 ausgebildet sind. Die ersten und zweiten Bereiche 21, 22 bilden daher gemeinsam betrachtet eine Profilierung nach Art einer Zahnstange.

Jeder zweite Bereich 22 des Elastomers 20 ist durch eine in Umfangsrichtung um den Gelenkkern 5 führende Nut 23 in dem Elastomer 20 gebildet. Beim Ausführungsbeispiel ist die Nut 23 von trapezförmigem Nutquerschnitt. Die Nut kann auch von U-förmigem Nutquerschnitt mit gerundetem Nutgrund sein.

Im fertig montierten Zustand ergänzen sich die Nuten 23 in den einzelnen Teilschalen 11, 12 zu einer in Umfangsrichtung vollumfänglichen Nut, die daher einen ringförmigen Hohlraum bildet.

Die Anzahl der ersten Bereiche 21 ist um den Zähler 1 größer als die Anzahl der zweiten Bereiche 22. Beim Ausführungsbeispiel beträgt die Anzahl der ersten Bereiche 21 vier und die Anzahl der zweiten, Hohlräume bildenden Bereiche 22 drei.

Das Elastomer 20 ist in nahe der Längsmitte gelegenen ersten Bereichen 21 von größerer radialer Dicke, als in anderen ersten Bereichen, die näher zu den Befestigungszapfen 3, 4 angeordnet sind. Mit anderen Worten ist das Elastomer endseitig im Bereich von Endabschnitten 25 verjüngt. Radial bedeutet vorliegend senkrecht zur Achse A und axial bedeutet vorliegend parallel zur Achse A.

Die Außenschalen 16 sind hier jeweils Halbschalen 11, 12 aus kaltverformtem Stahlblech. Sie weisen konisch verjüngte Bereiche 24 auf, in denen zumindest der Innendurchmesser der jeweiligen Außenschale 16 reduziert ist, wobei die verjüngten Bereiche 24 der Außenschalen die Endabschnitte 25 der Innenschalen 15 zumindest abschnittsweise axial einfassen und so für eine sichere axiale Verbindung der Bauteile sorgen.

Jeder der Befestigungszapfen 3, 4 weist, quer zu der Längsachse A, eine kreiszylindrische Durchgangsöffnung 26 als Verbindungshilfsmittel auf.

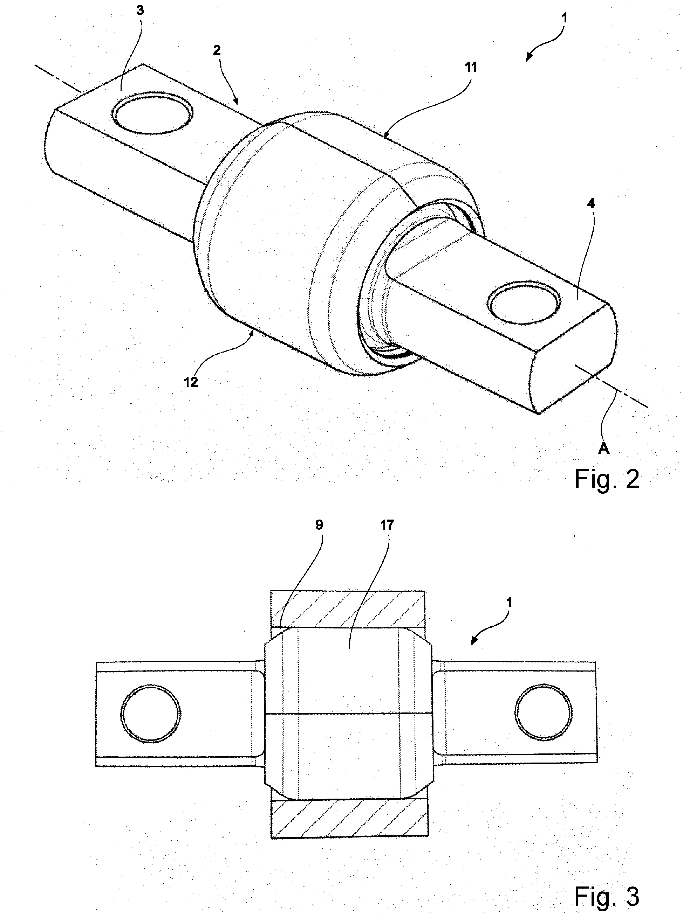

Zur Montage werden die Teilschalen 11, 12 mittels eines Werkzeugs gegen das Zentralelement 2 gepresst (Fig. 2) und unter Bildung eines Presssitzes in eine umgebende, kreiszylindrische Aufnahmeöffnung 9 des Fahrzeug-Lenkerarms eingepresst (Fig. 3). Die zylindrischen Außenflächen 17 bilden dabei gemeinsam eine im Wesentlichen kreiszylindrische Außenfläche und liegen von innen her in der zylindrischen Aufnahmeöffnung 9 des Fahrzeug-Lenkerarms an.

Indem die zweiten Bereiche 22 keinen Kontakt zu dem Gelenkkern 5 haben, wird in dem Elastomer 20 die im fertig montierten Zustand und unter den auftretenden Betriebslasten vorliegende Querdehnung bzw. Spannung reduziert, da sich das Elastomer der ersten Bereiche 21 in Richtung der Hohlräume bildenden zweiten Bereiche 22 ausdehnen bzw. in diese Hohlräume hinein verformen kann.

### Bezugszeichen

- 1: elastisches Gelenk
- 2: Zentralelement
- 3: Befestigungszapfen
- 4: Befestigungszapfen
- 5: Gelenkkern
- 6: Bolzen
- 9: Aufnahmeöffnung
- 10: Gelenkkörper
- 11: Teilschale
- 12: Teilschale
- 15: Innenschale
- 16: Außenschale
- 17: Außenfläche
- 20: Elastomer
- 21: erster Bereich
- 22: zweiter Bereich
- 23: Nut
- 24: verjüngter Bereich
- 25: Endabschnitt
- 26: Durchgangsöffnung
- A: Längsachse

## Patentansprüche

1. Elastisches Gelenk für einen Fahrzeug-Lenkerarm, mit
- einem auf einer Längsachse (A) sich erstreckenden Zentralelement (2) aus zwei Befestigungszapfen (3, 4) und einem zwischen diesen angeordneten Gelenkkern (5), wobei der Gelenkkern (5) ballig geformt ist aus in Bezug auf die Längsachse (A) ausschließlich runden Querschnitten, deren Größe zu den Befestigungszapfen (3, 4) hin jeweils abnimmt,
- einem den Gelenkkern (5) vollumfänglich umschließenden Gelenkkörper (10), der sich aus mindestens zwei Teilschalen (11, 12) zusammensetzt, die sich jeweils nur über einen Teilumfang des Gelenkkerns (5) erstrecken und jeweils aus einer starren Außenschale (16), die auf zumindest einem Teil ihrer Länge eine teilzylindrische Außenfläche (17) ausbildet, und einer verformbaren Innenschale (15) bestehen,
**dadurch gekennzeichnet, dass** die Innenschale (15) ausschließlich aus einem Elastomer (20) besteht, dass das Elastomer (20) außen mit der jeweiligen Außenschale (16) fest verbunden und innen unmittelbar gegen den Gelenkkern (5) abgestützt ist, und dass in Richtung der Längsachse (A) erste Bereiche (21), in denen sich das Elastomer (20) gegen den Gelenkkern (5) abstützt, durch einen zweiten Bereich (22) ohne einen Kontakt zwischen Elastomer (20) und Gelenkkern (5) voneinander getrennt sind.

2. Gelenk nach Anspruch 1, **dadurch gekennzeichnet, dass** die teilzylindrischen Außenflächen (17) ausgebildet sind, unter Bildung eines Presssitzes gemeinsam in eine umgebende zylindrische Aufnahmeöffnung (9) eingepresst zu werden.

3. Gelenk nach Anspruch 1 oder 2, **dadurch gekennzeichnet, dass** der zweite Bereich (22) durch eine in Umfangsrichtung um den Gelenkkern (5) führende Nut (23) in dem Elastomer (20) gebildet wird.

4. Gelenk nach Anspruch 3, **dadurch gekennzeichnet, dass** sich die Nuten (23) in den Teilschalen (11, 12) zu einer in Umfangsrichtung vollumfänglichen Nut ergänzen.

5. Gelenk nach Anspruch 3 oder 4, **dadurch gekennzeichnet, dass** die Nut (23) von U-förmigem Nutquerschnitt mit gerundetem Nutgrund ist.

6. Gelenk nach einem der vorangehenden Ansprüche, **dadurch gekennzeichnet, dass** die Anzahl der ersten Bereiche (21) um den Zähler 1 größer als die Anzahl der zweiten Bereiche (22) ist.

7. Gelenk nach einem der vorangehenden Ansprüche, **dadurch gekennzeichnet, dass** die Anzahl der ersten Bereiche (21) mindestens drei und die Anzahl der zweiten Bereiche (22) mindestens zwei beträgt.

8. Gelenk nach Anspruch 7, **dadurch gekennzeichnet, dass** das Elastomer (20) in einem nahe der Längsmitte gelegenen ersten Bereich (21) von größerer radialer Dicke ist als in ersten Bereichen (21), die näher zu den Befestigungszapfen (3, 4) angeordnet sind.

9. Gelenk nach einem der vorangehenden Ansprüche, **dadurch gekennzeichnet, dass** die Außenschalen (16, 17) jeweils Halbschalen (16, 17) aus kaltverformtem Stahlblech sind.

10. Gelenk nach einem der vorangehenden Ansprüche, **dadurch gekennzeichnet, dass** die Außenschalen (16, 17) verjüngte Bereiche (24) aufweisen, in denen insbesondere ein Innendurchmesser der jeweiligen Außenschale (16, 17) reduziert ist, insbesondere konisch verjüngte Bereiche (24) aufweisen, wobei die verjüngten Bereiche (24) der Außenschalen (16, 17) Endabschnitte (25) der Innenschalen (15) zumindest abschnittsweise axial einfassen.

## Claims

1. Elastic joint for a vehicle link arm, having
- a central element (2), which extends along a longitudinal axis (A) and is made up of two fastening pins (3, 4) and a joint core (5) arranged between said fastening pins, wherein the joint core (5) is shaped convexly from exclusively round cross sections in relation to the longitudinal axis (A), the size of which decreases in the direction of the fastening pins (3, 4) in each case,
- a joint body (10), which surrounds the joint core (5) over the full circumference and is made up of at least two part-shells (11, 12), each of which extends over only part of the circumference of the joint core (5) and consists of a rigid outer shell (16), which forms a partially cylindrical outer surface (17) over at least a part of its length, and a deformable inner shell (15),
**characterized in that** the inner shell (15) consists exclusively of an elastomer (20), **in that** the elastomer (20), at the outside, is connected fixedly to the respective outer shell (16) and, at the inside, is supported directly against the joint core (5), and **in that**, in the direction of the longitudinal axis (A), first regions (21), in which the elastomer (20) is supported against the joint core (5), are separated from one another by a second region (22) having no contact between elastomer (20) and joint core (5).

2. Joint according to Claim 1, **characterized in that** the partially cylindrical outer surfaces (17) are configured to be pressed jointly into a surrounding cylindrical receiving opening (9) such that a press fit is formed.

3. Joint according to Claim 1 or 2, **characterized in that** the second region (22) is formed by a groove (23) in the elastomer (20), said groove leading around the joint core (5) in a circumferential direction.

4. Joint according to Claim 3, **characterized in that** the grooves (23) in the part-shells (11, 12) complement one another to form a groove over the full circumference in the circumferential direction.

5. Joint according to Claim 3 or 4, **characterized in that** the groove (23) has a U-shaped groove cross section with a rounded groove base.

6. Joint according to one of the preceding claims, **characterized in that** the number of first regions (21) is greater than the number of second regions (22) by 1.

7. Joint according to one of the preceding claims, **characterized in that** the number of first regions (21) is at least three, and the number of second regions (22) is at least two.

8. Joint according to Claim 7, **characterized in that** the elastomer (20) has a greater radial thickness in a first region (21) which is situated close to the longitudinal centre than in first regions (21) which are arranged closer to the fastening pins (3, 4) .

9. Joint according to one of the preceding claims, **characterized in that** the outer shells (16, 17) are respective half-shells (16, 17) composed of cold-worked sheet steel.

10. Joint according to one of the preceding claims, **characterized in that** the outer shells (16, 17) have tapered regions (24), in which in particular an inner diameter of the respective outer shell (16, 17) is reduced, in particular conically tapered regions (24), wherein the tapered regions (24) of the outer shells (16, 17) at least sectionally axially border end portions (25) of the inner shells (15) .

## Revendications

1. Articulation élastique pour un bras de suspension de véhicule, comprenant
- un élément central (2) s'étendant sur un axe longitudinal (A), composé de deux tenons de fixation (3, 4) et d'un noyau d'articulation (5) disposé entre ceux-ci, dans laquelle le noyau d'articulation (5) est formé de manière bombée avec des sections transversales exclusivement rondes par rapport à l'axe longitudinal (A) et dont la grandeur diminue respectivement en direction des tenons de fixation (3, 4),
- un corps d'articulation (10) entourant le noyau d'articulation (5) sur toute la circonférence et qui est composé d'au moins deux coques partielles (11, 12) qui ne s'étendent respectivement que sur une circonférence partielle du noyau d'articulation (5) et sont respectivement composées d'une coque extérieure (16) rigide qui réalise sur au moins une partie de sa longueur une surface extérieure partiellement cylindrique (17) et d'une coque intérieure (15) déformable,
**caractérisée en ce que** la coque intérieure (15) est composée uniquement d'élastomère (20), **en ce que** l'élastomère (20) est à l'extérieur relié solidement à la coque extérieure (16) respective et prend appui à l'intérieur directement sur le noyau d'articulation (5), et **en ce qu'**en direction de l'axe longitudinal (A), des premières zones (21) dans lesquelles l'élastomère (20) prend appui sur le noyau d'articulation (5) sont séparées les unes des autres par une deuxième zone (22) sans contact entre l'élastomère (20) et le noyau d'articulation (5).

2. Articulation selon la revendication 1, **caractérisée en ce que** les surfaces extérieures (17) partiellement cylindriques sont réalisées pour être enfoncées ensemble dans une ouverture de réception cylindrique (9) en formant un ajustage serré.

3. Articulation selon la revendication 1 ou 2, **caractérisée en ce que** la deuxième zone (22) est formée dans l'élastomère (20) par une rainure (23) contournant le noyau d'articulation (5) dans la direction circonférentielle.

4. Articulation selon la revendication 3, **caractérisée en ce que** les rainures (23) dans les coques partielles (11, 12) se complètent pour former une rainure sur toute la circonférence dans la direction circonférentielle.

5. Articulation selon la revendication 3 ou 4, **caractérisée en ce que** la rainure (23) présente une section transversale de rainure en forme de U à fond de rainure arrondi.

6. Articulation selon l'une quelconque des revendications précédentes, **caractérisée en ce que** le nombre des premières zones (21) est supérieur du numérateur 1 au nombre des deuxièmes zones (22).

7. Articulation selon l'une quelconque des revendications précédentes, **caractérisée en ce que** le nombre des premières zones (21) est au moins trois, et le nombre des deuxièmes zones (22) est au moins deux.

8. Articulation selon la revendication 7, **caractérisée en ce que** dans une première zone (21) située près du centre longitudinal, l'élastomère (20) présente une épaisseur radiale supérieure à celle dans des premières zones (21) qui sont disposées plus près des tenons de fixation (3, 4).

9. Articulation selon l'une quelconque des revendications précédentes, **caractérisée en ce que** les coques extérieures (16, 17) sont respectivement des demi-coques (16, 17) en tôle d'acier formée à froid.

10. Articulation selon l'une quelconque des revendications précédentes, **caractérisée en ce que** les coques extérieures (16, 17) présentent des zones amincies (24) dans lesquelles en particulier un diamètre intérieur de la coque extérieure (16, 17) respective est réduit, présentant en particulier des zones (24) s'amincissant de manière conique, dans laquelle les zones amincies (24) des coques extérieures (16, 17) enferment axialement des parties d'extrémité (25) des coques intérieures (15) au moins par endroits.
